Europäisches Patentamt

European Patent Office

Office européen des brevets

(19)

(11) Veröffentlichungsnummer: **0 619 639 A1**

## (12) EUROPÄISCHE PATENTANMELDUNG

(21) Anmeldenummer: **94106155.8**

(22) Anmeldetag: **18.12.89**

(51) Int. Cl.⁵: **H02K 29/00**, G05D 3/14

Diese Anmeldung ist am 20 - 04 - 1994 als Teilanmeldung zu der unter INID-Kode 60 erwähnten Anmeldung eingereicht worden.

(30) Priorität: **18.12.88 CH 4645/88**

(43) Veröffentlichungstag der Anmeldung:
**12.10.94 Patentblatt 94/41**

(60) Veröffentlichungsnummer der früheren
Anmeldung nach Art. 76 EPÜ: **0 374 805**

(84) Benannte Vertragsstaaten:
**CH DE ES FR GB IT LI NL SE**

(71) Anmelder: **Buck Werke GmbH & Co
Geislinger Strasse 21**
**D-73337 Bad Überkingen (DE)**

(72) Erfinder: **Hugel, Jörg, Prof. Dr. Ing.
Russenweg 24
CH-8008 Zürich (CH)**
Erfinder: **Amrhein, Wolfgang, Dr.
Lerchenweg 4 b
D-78126 Königsfeld (DE)**
Erfinder: **Dietrich, Frank, Dipl.-Phys. (FH)
Akazienweg 21
D-67434 Neustadt/Weinstrasse (DE)**

(74) Vertreter: **Spott, Gottfried, Dr.
Spott Weinmiller & Partner
Sendlinger-Tor-Platz 11
D-80336 München (DE)**

(54) **Elektronisch kommutierter Synchronmotorantrieb.**

(57) Es wird ein elektronisch kommutierter Synchronmotorantrieb in Form eines Linear- oder Rotationsaktuators offenbart, dessen Aktuatorelement aus einem verschiebbar bzw. drehbar gelagerten Permanentmagneten und dessen Stator aus einer Wicklung gebildet ist. Erfindungsgemäß wird vorgeschlagen, einen gegenüber dem Stand der Technik verbesserten Gleichlauf dadurch zu erzielen, daß eine Detektoreinrichtung (11-14,20-24), welche ein die jeweilige Relativ- bzw. Winkellage des Linear- bzw. Rotationsaktuators anzeigendes Positionssignal erzeugt sowie eine Ansteuereinrichtung vorzusehen, die nach Maßgabe des Positionssignals der Wicklung (3,3a,3b) einen der erfaßten Position zugeordneten sinusförmigen oder im positiven und negativen Bereich mehrstufigen Strom einprägt.

Fig. 2

EP 0 619 639 A1

Die Erfindung bezieht sich auf einen elektronisch kommutierten Synchronmotorantrieb in Form eines Linear- oder Rotationsaktuators gemäß dem Oberbegriff des Patentanspruchs 1.

Ein elektronisch kommutierter Synchronmotorantrieb dieser Art ist beispielsweise in der DE 24 23 665 A1 beschrieben. Dieser bekannte Synchronmotorantrieb weist als Antriebs- bzw. Aktuatorelement einen drehbar gelagerten Permanentmagneten auf; das Antriebselement kann gleichwohl auch ein linearer Permanentmagnet-Aktuator sein, so daß ein Linearmotor gebildet wird. Der Stator ist bei diesem bekannten Synchronmotorantrieb aus einer Wicklung gebildet, wodurch zur Ansteuerung ein elektronisch erzeugter Mehrphasen-Wechselstrom benötigt wird. Die infolgedessen benötigte elektronische Steuerschaltung mit Leistungshalbleitern stellte bislang einen gewissen Aufwand dar, der die im Vergleich zu mechanisch kommutierten Gleichstrommotoren, wie sie z. B. in etz, Bd. 106, Heft 20, Elektrische Kleinstmotoren, H. Moczala, beschrieben sind, niedrigeren Herstellungskosten mehr als aufgewogen hat, mit der Folge, daß im Leistungsbereich bis ca. 500 W, dem für Servoantriebe eine hohe Bedeutung zukommt, bislang der mechanisch kommutierte Gleichstrommotor dominiert.

Durch die fortschreitende Miniaturisierung und Integrationsdichte werden elektronische Kommutatorschaltungen jedoch ständig preiswerter, so daß in zunehmendem Maße der Einsatz von gattungsgemäßen elektronisch kommutierten Motoren erwogen wird. Dies gilt insbesondere für Anwendungen, in denen bei mechanisch kommutierten Gleichstrommotoren die vom Bürsten-Kommutatorsystem vorgegebene Begrenzung der Drehzahl, des Drehmoments, der Lebensdauer und der Zuverlässigkeit nicht toleriert werden kann.

Dennoch weist unter den mechanisch kommutierten Gleichstrommotoren insbesondere der Glockenankermotor Vorteile auf, die bislang mit elektronisch kommutierten Motoren nur schwerlich erzielt werden konnten. Einige dieser Vorteile des Glockenankermotors, wie er beispielsweise in Trägheitsarme Gleichstrom-Servomotoren für schnelle Bewegungsabläufe, Konstruktion, Elemente, Methoden, II. 10/1975, M. Heyraud, beschrieben ist, sind z. B. die lineare Kennlinie, die niedrige Anlaufspannung, das Fehlen eines Haltemoments sowie von Hysterese- und Wirbelstromverlusten, kleine elektrische und mechanische Zeitkonstanten sowie insbesondere die sehr kleinen Drehmomentschwankungen.

Für den Einsatz der erfindungsgemäßen elektronisch kommutierten Motore als Servoantriebe kommt vor allem einer möglichst geringen Drehmomentschwankung die größte Bedeutung zu. Es wurden daher bereits Versuche unternommen, diesbezüglich Fortschritte zu erzielen.

So wird z. B. in Feinwerktechnik und Messtechnik 88 (1988), Heft 4, Ein elektronisch kommutierter Scheibenläufermotor mit Samarium-Kobalt-Magneten, J. Lindner, vorgeschlagen, den Anker mit Drahtwicklungen auszustatten und diesem eine rechteckförmige Phasenspannung einzuprägen. Eine relativ hohe Rundlaufgüte bzw. geringe Drehmomentschwankungen werden erreicht, indem eisenlose Wicklungen hoher Phasenzahl mit schwacher Sehnung bzw. Wicklungsverteilung verwendet werden. Eine derartige konzentrierte Wicklung hoher Phasenzahl hat jedoch den Nachteil, daß für die Ansteuerelektronik ein hoher Aufwand erforderlich ist, da jede Phase mit minimal einem, in der Regel jedoch zwei oder vier Leistungsschaltern kommutiert werden muß. Eine Reduzierung der Phasenzahl bei gleichbleibender Wicklungskonzentration bedingt ebenso wie eine stärkere Wicklungssehnung einen geringeren Wirkungsgrad, wenn gleichwohl ein guter Rundlauf erzielt werden soll. Aus der genannten Druckschrift (J. Lindner) geht ferner hervor, daß z. B. bei einem B-phasigen Scheibenläufermotor bei großer Sehnung der Wicklung der zulässige Winkelbereich für die Blockwerte der Rechteckansteuerung sehr klein wird, wenn eine hohe Rundlaufgüte angestrebt wird. Im Falle einer B-phasigen konzentrierten Wicklung bleibt demgegenüber ein großer Bereich des zur Verfügung stehenden Luftspaltes kupferlos. In beiden Fällen ist daher eine unbefriedigende Motorausnutzung unvermeidbar.

Bei Motoren, die mit Nuten ausgestattet sind, sind Maßnahmen bekannt, um den Rundlauf zu verbessern. So wird z. B. in Elektrische Maschinen, Band 1 - 3, VEB-Verlag Technik Berlin, 1979, G. Müller vorgeschlagen, eine Schrägung des Eisenblechpaketes um eine Nutteilung vorzunehmen, in Valvo Berichte, Band 20, II., Ferroxdure-Segmenten, J. Koch findet sich der Hinweis, eine geeignete Gestaltung der Magnetform vorzunehmen, wohingegen in Bosch technische Berichte, Band 4 (1973), Heft 3, Die Verringerung der Flußschwankung in kleinen Gleichstrommotoren, A. Mohr, eine entsprechende Gestaltung der Nut-Zahn- oder Polschuhgeometrie angeregt ist.

Abgesehen davon, daß diese bekannten Maßnahmen für anspruchsvolle Rundlaufanforderungen häufig nicht ausreichen, liegt ein weiterer Nachteil der bekannten Motoren darin, daß die Nutung einen relativ hohen Herstellungsaufwand zur Folge hat.

Der Erfindung liegt die Aufgabe zugrunde, einen elektronisch kommutierten Synchronmotorantrieb zu schaffen, mit dem ein hervorragender Rundlauf bei vertretbarem Herstellungsaufwand erzielbar ist.

Diese Aufgabe wird erfindungsgemäß mit den in dem Patentanspruch 1 angegebenen Maßnahmen gelöst.

Mit der Erfindung läßt sich ein verbesserter Gleichlauf dadurch erzielen, daß eine Detektoreinrichtung, welche ein die jeweilige Relativ- bzw. Winkellage des Linear- bzw. Rotationsaktuators anzeigendes Positionssignal erzeugt, sowie eine Ansteuereinrichtung vorgesehen wird, die nach Maßgabe des Positionssignals der Wicklung einen der erfaßten Position zugeordneten Strom bzw. eine der erfaßten Position zugeordnete Spannung erzeugt, dessen bzw. deren Kurvenform sich aus einzelnen im voraus definierten Harmonischen zusammensetzt und die insbesondere einer sinusförmigen Kurvenform entspricht. Diese Maßnahme hat den Vorteil, daß für einen guten Gleichlauf keine konzentrierte Wicklung benötigt wird, wobei sich eine stark gesehnte Wicklung sogar günstig auswirkt. Ferner kann der von dem permantentmagnetischen Feld durchströmte Luftspalt mit einem guten Kupferfüllfaktor realisiert werden, ohne daß für eine hervorragende Motorausnutzung und einen guten Gleichlauf eine hohe Phasenzahl nötig wäre. Die Struktur der spiralförmigen Wicklung kann hierbei durch Optimierungsrechnungen oder experimentelle Versuche ermittelt und derart eingestellt werden, daß die Drehmoment- bzw. Gleichlaufschwankungen praktisch verschwinden, wie durch gefertigte Motor-Muster bestätigt werden konnte.

Da, wie bereits erläutert, der Aufwand für die Steuerelektronik im Vergleich zu den Herstellungskosten ständig mehr in den Hintergrund tritt, wird dieser verbesserte Gleichlauf erzielt, ohne daß die Herstellungskosten des Gesamtsystems im Vergleich zu den gattungsgemäßen Einrichtungen in nennenswertem Umfang erhöht werden würden.

Gemäß vorteilhaften Weiterbildungen der Erfindung ist ferner die Integration eines hochauflösenden Winkelgebers oder zusätzlicher anderer Geber bzw. Sensoren vorgesehen, indem z. b. direkt auf dem Multilayer Schaltungsbestandteile desselben integriert werden oder indem die Rotorscheibe gleichzeitig die Funktion eines Trägers für Teile des Sensors übernimmt. Hierdurch ist eine platzsparende Gesamtkonstruktion realisierbar.

Weiterhin kann die Wicklung aus mindestens einer Multilayerwicklung gebildet werden. Hierdurch wird erreicht, daß beispielsweise durch Versuche oder mittels eines später erläuterten Programms ein Wicklungsverlauf erzeugt werden kann, der eine hohe Rundlaufgüte sicherstellt. Aufgrund der relativ einfachen Herstellung eines derartigen Multilayers ist der Herstellungsaufwand im Vergleich zum Stand der Technik nicht erhöht, und zwar insbesondere dann, wenn der Multilayer als gedruckte oder gestanzte Schaltung ausgebildet ist. In diesem Falle lassen sich die Produktionskosten sogar senken, da mittels geeigneter Maschinen problemlos mehrere Wicklungen parallel herstellen lassen, indem eine hohe Stückzahl von Einzelwicklungen zusammen auf einem Nutzen angeordnet werden, welche folglich die gleichen ätztechnischen oder galvanischen Fertigungsprozesse durchlaufen und anschließend leicht vom Nutzen getrennt werden können. Darüber hinaus kommt auch eine Herstellung durch auf Leiterplattenfertigung spezialisierte Firmen in Frage, was u. U. eine weitere Kostensenkung bedingen kann.

Weiterhin kann in diesem Fall auf dem Multilayer ein hochauflösender Winkelsensor integriert werden. Auch andere elektronische Komponenten, wie Teile der Ansteuerschaltung des Sensors oder der Leistungselektronik, lassen sich auf dem Multilayer integrieren; hierdurch wird erreicht, daß ein äußerst kompakter und zuverlässiger Antrieb zur Verfügung steht.

Ferner ermöglicht es die Ausbildung der Wicklung als Multilayer in Form einer gedruckten oder gestanzten Schaltung, die im Stand der Technik nachteilige, durch die Taktung hervorgerufene und auf die elektromagnetischen Kräfte zurückzuführende Geräuschentwicklung der Drähte der Wicklung praktisch völlig auszuschalten, da benachbarte Leiterbahnen voneinander räumlich getrennt und auf einem schwingungsdämpfenden Kunststoff- oder Glasfaserträger befestigt sind. Auch der relativ hohe Aufwand für Wickelmaschinen sowie für die Montage läßt sich deutlich verringern. Schließlich ermöglicht es eine gedrukte oder gestanzte Schaltung, die Leiterbahnbreiten so zu variieren, daß eine noch bessere Motorausnutzung, ein erhöhter Wirkungsgrad sowie ein vergleichmäßigter Rundlauf erzielbar ist.

Weitere vorteilhafte Weiterbildungen der Erfindung sind Gegenstand der übrigen Unteransprüche, wobei Versuche ergeben haben, daß eine die wesentlichen Merkmale dieser Ansprüche aufweisender Ausführungsform des Motors hinsichtlich Gleichlaufgüte, Drehmomentschwankung und Wirkungsgrad sogar vergleichbaren Glockenankermotoren überlegen ist.

Die Erfindung wird nachstehend anhand der Beschreibung von Ausführungsbeispielen in Form von Scheibenläufermotoren unter Bezugnahme auf die Zeichnung näher erläutert. Es zeigen:

Fig. 1:    zwei Ausführungsformen des magnetischen Rückschlußjoches, nämlich

a) einen massiven Rückschluß in Form eines Eisenjochs bzw. einer Trägerplatte für den Permanentmagnetrotor;

b) einen geblechten ringförmigen Rückschluß als Träger für die Statorwicklung;

Fig. 2:    anhand eines Querschnitts eine Ausführungsform der Erfindung in Form eines Synchronmotors mit integriertem optischen Dreikanal-Encoder;

Fig. 3:    Ätzmasken einer incrementalen Encoderscheibe, die zwei um 90 Grad versetzte Strichrasterblöcke sowie eine Referenzmarke aufweist;

Fig. 4: die Vorderseite des Leiterbahnbildes einer Wicklungsebene einer 8-poligen 5-Phasen-Evolventenwicklung;

Fig. 5: die Vorderseite des Leiterbahnbildes einer Wicklungsphase einer 12-poligen 3-Phasen-Spiralwicklung;

Fig. 6: eine Spiralwicklungsphase mit verbreiterten Leiterbahnführungen außerhalb des magnetischen Luftspaltfeldes.

Fig. 7: in einem Explosionszeichnungs-Querschnitt einen Wicklungs-Multilayer;

Fig. 8: Ätzmasken einzelner Multilayerschichten einer Phase, nämlich a) der Oberseite und b) der Unterseite;

Fig. 9: Ätzmasken einer Elektronik-Trägerfolie mit einer Wicklung zur Temperaturbestimmung;

Fig. 10: ein Ausführungsbeispiel, bei dem ein ohmsches Leitplastikpotentiometer als Lagesensor integriert ist;

Fig. 11: anhand eines Blockschaltbildes eine elektronische Ansteuerungsschaltung des Motors; und

Fig. 12: anhand eines Blockschaltbildes den Einsatz eines Leitplastik-Potentiometers als Signalgeber.

Das Ausführungsbeispiel des erfindungsgemäßen Motors zeichnet sich im wesentlichen durch die nachfolgend erläuterte Problemlösung aus: Schaffung eines 3-phasigen Synchronmotors mit elektronischer Ansteuerung in drei Versionen:

a) Integration eines hochauflösenden 3-Kanal-Encoders mit 500 Impulsen pro Umdrehung für anspruchsvolle Positions-, Drehzahl- und Drehmoment-Regelantriebe;

b) Integration eines hochauflösenden Leitplastikpotentiometers, das besonders für Anwendungen mit großem Temperaturbereich geeignet ist;

c) Integration eines Minimalencoders, sowie einer Steuer- und Leistungselektronik in SMD-Technik für einfache, sehr verlustarme DC-Steuerungen, wie Batterieantriebe;

d) zusätzliche Integration einer Temperaturmeßsonde direkt auf der Wicklung;

e) zusätzliche Integration der Ansteuerschaltung auf der Wicklung oder im Motorgehäuse.

Die wichtigsten Betriebsparameter des erfindungsgemäßen Motors sind eine extrem hohe Rundlaufgüte, eine kleine Motorregulierungskontrolle, ein hoher Wirkungsgrad, ein hohes Nennmoment, geringe Leerlaufverluste (Batteriebetrieb) und eine lineare Charakteristik.

Aus den genannten Forderungen resultieren grundlegende Konstruktionsprinzipien, von denen die wichtigsten im folgenden erläutert werden.

Für eine günstige Auslegung des magnetischen Kreises empfiehlt es sich, wenigstens eine Dimension des Motors im Vergleich zu den restlichen besonders klein zu wählen. So werden bei zylindrischen Motoren mit radialer oder diametraler Magnetisierung die besten Ergebnisse in bezug auf die magnetische Steuerung und Wicklungsausnutzung erzielt, wenn die Motorlänge im Vergleich zum Motordurchmesser möglichst groß gewählt wird. Bei Flachmotoren mit axialer Magnetisierung verhält es sich umgekehrt. Hier sollte das Verhältnis von Motorlänge zum Durchmesser möglichst klein sein. In Anbetracht der Möglichkeit einer Integration eines hochauflösenden Encoders (großer Durchmesser), sowie einer Integration von Steuer- und Leistungselektronik bietet sich die Flachbauweise an. Die Flachmotoren bieten für zahlreiche Anwendungen große konstruktive Vorteile, sind aber in viel geringerem Umfang industriell verfügbar als die zylindrische Ausführung.

Während bei Kommutatormotoren eine hochpolige Magneterregung durch ein kompliziertes und somit teures Bürstensystem erschwert wird, kann beim Synchronmotor dieser Freiheitsgrad voll ausgenutzt werden. Eine hochpolige Ausführung führt zu kleineren weichmagnetischen Rückschlußquerschnitten sowie zu einem günstigen Verhältnis von aktiver Wicklungslänge zur Wicklungsgesamtlänge. Die Grenzen bezüglich der Wahl der Polzahl sind durch die zunehmenden magnetischen Streufelder und Wirbelstrom- bzw. Hystereseverluste gegeben. Magnetische Feldberechnungen führen unter den gegebenen Randbedingungen zur optimalen Polzahl. Eine detaillierte Darstellung hierzu befindet sich in der Dissertation Nr. 8745, ETH-Zürich, "Beiträge zum Entwurf von permanenterregten Kleinmotoren hoher Rundlaufgüte", W. Amrhein.

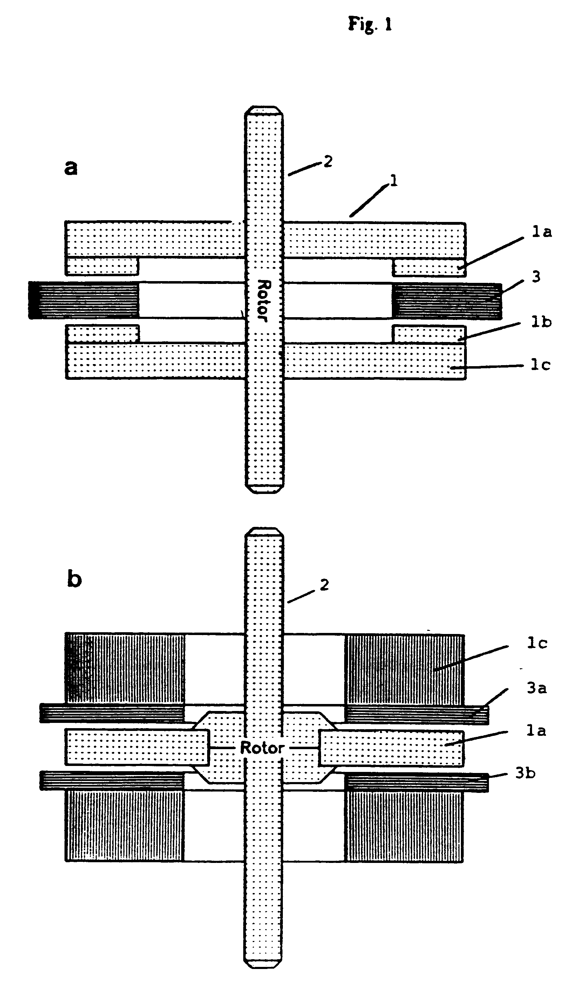

Ein wichtiger Gesichtspunkt für die Motorenentwicklung ist die konstruktive Gestaltung des Rückschlußjoches, wobei in Figur 1 zwei mögliche Prinzipien dargestellt sind, nämlich

a) ein rotorseitiger Eisenrückschluß und

b) ein statorseitiger Eisenrückschluß.

Beide Prinzipien sind brauchbar und haben ihre Vor- und Nachteile; je nach Zielsetzung wird man sich für die eine oder andere Variante entscheiden. Um eine Auswahl treffen zu können, sind die wesentlichen Vor- und Nachteile der beiden Systeme in der Tabelle 1 einander gegenübergestellt. Ausschlaggebend für die Wahl des rotorseitigen Rückschlusses sind im wesentlichen, daß der magnetische Kreis frei von Wirbelstrom- und Hystereseverlusten ist, die Ausnutzung des weichmagnetischen Materials erheblich besser ist als bei statorseitigem Rückschluß und die Störgeräusche bei getakteter Motoransteuerung entfallen.

Je nach Bedarf können mehrere Rotor- und Statorelemente mechanisch hintereinandergeschaltet werden, wobei zwei benachbarte gleiche Elemente zu einem Element vereinigt werden können, z. B. zwei benachbarte Rückschlußscheiben.

Die Ausführung der Permanentmagnetbestückung kann ebenfalls variieren. Zum einen ist es möglich, die Magnetsegmente zu fertigen und diese dann zum Beispiel auf einem Träger zusammenzufügen; andererseits kann man auch einen Magnetring fertigen und die gewünschte Magnetpolkonfiguration aufmagnetisieren. Der Magnetring kann freitragend oder auf einer Trägerplatte montiert sein.

Tabelle 1:

Vergleich der resultierenden Vorteile und Nachteile bei rotorseitigem bzw. statorseitigem Eisenrückschluß (vgl. Fig. 1)

| Auswahl-kriterien | rotorseitiger (massiver) Eisenrückschluß | statorseitiger (geblechter) Eisenrückschluß |
|---|---|---|
| Wicklung | kompakte, freitragende Wicklung; | zweiteilige Wicklungs-konfiguration auf Trä-gerplatten (gute Stabi-lität); |
| | Wärmeabfuhr über die äußere Einspannvor-richtung; | Wärmeabfuhr über den ge-samten Wicklungsquer-schnitt; |
| Rückschluß-joch | einfacher, massiver Rückschluß; | gewickelter Ringband-kern; |
| | keine Hysterese- und Wirbelstromverluste; | magnetische Verluste unvermeidbar; |
| | Material mit extrem hoher Sättigungsin-duktion verwendbar; | nur Material mit sehr niedriger Koerzitivfeld-stärke empfehlenswert (=> niedrige Sättigungs-induktion); |
| | Material kann bis an Sättigungsgrenze aus-genutzt werden; | hohe Induktion ver-größern die Verluste erheblich; |
| | ungehinderte Flußver-teilung möglich; | durch Blechung vergrös-serter effektiver Luft-spalt; |
| | kompakt; einfache Her-stellung | großes Volumen, kosten-intensiv |
| Permanent-magnete | auf Trägerplatte fixiert, hohe Festigkeit gegen-über Schock und Vibra-tion; | freitragend, bei sprödem Material (bsd. Ferrite und Selten Erden-Magne-te) Bruchgefahr; |
| | deshalb große Ring-breiten zulässig; | |

| Betriebs-eigen-schaften | kleine Regulierungs-konstante und somit großer Wirkungsgrad; keine Störgeräusche durch Magnetostriktion bei getakteter Ansteuerung | kleine mechanische Zeit-konstante (kleines Massenträgheitsmoment); Störgeräusche größer |
|---|---|---|

Um permantentmagnetische Rastmomente, die durch die Statornutzung bedingt sind, völlig auszuschalten, wird der Servomotor erfindungsgemäß mit einer eisenlosen Flachwicklung ausgerüstet. Es entfallen somit zusätzliche Probleme wie Zahnkopfsättigung, verstärkte Ankerrückwirkung oder Nutschrägung. Bezüglich der Wicklungsausführung sind verschiedene Lösungen realisierbar.

Eine Möglichkeit ist der Einsatz von Drahtwicklungen. Besonders gut eignen sich hier Wicklungsspulen, die mit Rechteckdrähten aufgebaut sind, da sich im Vergleich zu Runddrähten ein höherer Füllfaktor erreichen läßt. Ein Ausführungsbeispiel für die Herstellung solcher Wicklungsspulen kann folgendermaßen aussehen:

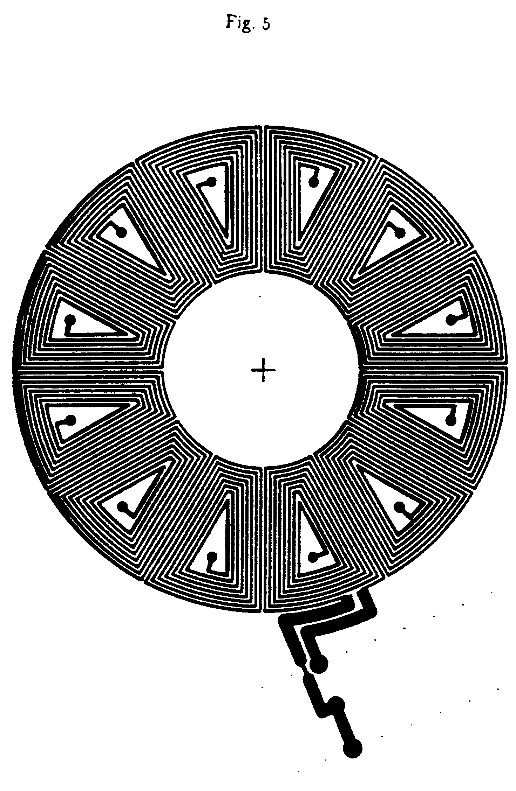

Man verwendet einen Wicklungsdorn, dessen Querschnitt günstig gewählt wird, damit eine ähnliche Wicklungsstruktur mit großen diametralen Abschnitten entsteht wie in der nachfolgend beschriebenen Ausführung in gedruckter Technik (Fig. 5). Hierdurch wird ein hoher Kupferfüllfaktor der Gesamtwicklung erreicht, denn zwischen benachbarten Spulen sind nur kleine Zwischenräume. Die Flachspule kann in Richtung zur Motorachse einlagig oder mehrlagig aufgebaut sein. Die einzelnen Spulen werden dann für jede Motorphase getrennt in einer Ebene (analog dem Beispiel in gedruckter Technik) nebeneinander angeordnet. Die Anzahl der Spulen einer Ebene entspricht der Polzahl des Motors. Die Verbindung der Einzelspulen kann je nach Bedarf seriell, parallel oder eine Kombination aus beiden sein. Die einzelnen Motorphasen und somit die einzelnen Ebenen sind um den elektrischen Phasenwinkel (z. B. bei 3 Phasen: 120 Grad) zueinander verdreht. Die Gesamtwicklung, bestehend aus den einzelnen Spulen in verschiedenen Ebenen, wird fixiert. Die kann erreicht werden durch sogenanntes Verbacken der Drähte bei Verwendung thermohärtender kunststoffbeschichteter Drähte, durch Verkleben oder durch Fixierung der Wicklungsanordnung auf einem Träger.

Anstelle von Drähten mit Rechteckquerschnitt können selbstverständlich auch Runddrähte verwendet werden.

Eine andere bevorzugte Realisierungsmöglichkeit der Wicklung ist die Anwendung der gestanzten oder gedruckten Technik. Unter Beachtung der eingangs definierten Zielsetzung sprechen mehrere Faktoren für einen Multilayeraufbau unter Anwendung moderner Feinätztechnologie oder unter Anwendung eines speziellen und später noch beschriebenen Prozesses, bei welchem die Leiterbahnen galvanisch aufgebaut werden. Hierdurch ergeben sich die Vorteile eines zusätzlichen Freiheitsgrades (variabler Leiterquerschnitt, was für die Flachwicklung besonders interessant ist), einer einfachen Integration der elektrischen Schaltung des Winkelgebers und des Temperaturfühlers direkt auf dem Wicklungsprint, von berührungsfreien Leiterbahnen (somit keine Geräuschentwicklung bei getakteter Wicklungsspeisung), der Erzielung relativ hoher Füllfaktoren und einer einfachen Herstellung sowie Montage.

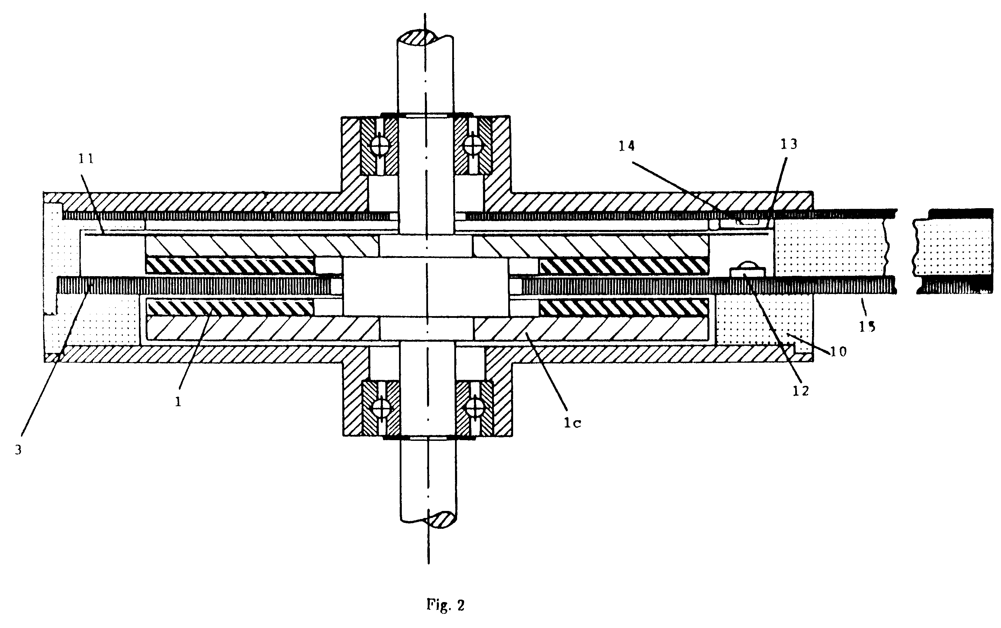

In Fig. 2 ist der konstruktive Aufbau des Micro-Synchronmotors dargestellt. Im Zentrum des Motors befindet sich der Wicklungs-Multilayer. Dieser ist laminar unterteilt in vier Lagen: den drei Wicklungsphasen sowie einer Lage für die senderseitige SMD-Schaltung mit integriertem Temperaturfühler.

Die Wicklung 3 wird von einem symmetrischen Flachrotor 1 beidseitig umschlossen. Der Läufer besteht aus zwei weichmagnetischen Trägerplatten 1c hoher Sättigungsinduktion, die beispielsweise mit SmCo-bzw. NeFeB-Magnetscheiben bestückt sind. Diese Materialien weisen die zur Zeit höchste Energiedichte auf und erlauben zum Beispiel im Vergleich zu Ferritmagneten eine starke Reduzierung des Bauvolumens.

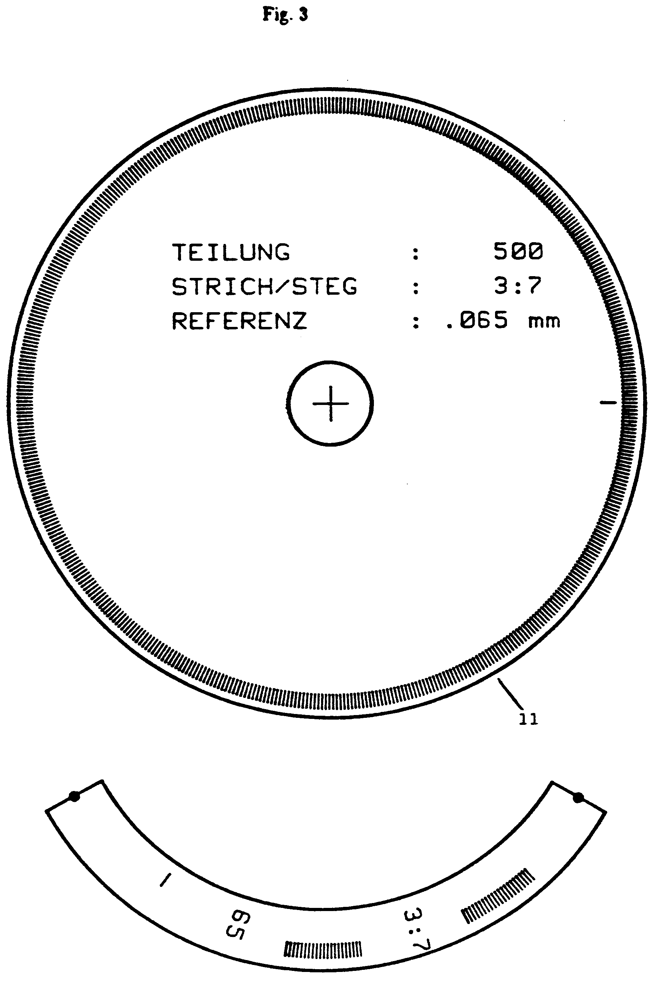

Auf einer der beiden Magnetträgerplatten 1c ist die optische Codescheibe 11 mit einer Teilung von 500 Strichen pro Umdrehung sowie einer Referenzmarke befestigt (s. Fig. 3). Über die Blende 13 (s. Fig. 3), die aus zwei um 90 Grad versetzten Strichrasterblöcken besteht, treffen Lichtpulse auf die drei optischen Sensoren 14. Das Signal wird vorort auf der gedruckten Schaltung verstärkt, flankenbereinigt und an den Anschlußsockel 15 geleitet. Die Ansteuerung der Wicklungsphasen erfolgt somit synchron mit der aus den Encodersignalen ermittelten Rotorposition.

Die Wicklung 3 sitzt auf einem in der Zeichnung mit Punkten überzogenen Tragring auf. Dieser verleiht der Wicklung zusätzliche Stabilität und kann gleichzeitig zur Wärmeabfuhr genutzt werden, wenn er beispielsweise aus einem metallischen Werkstoff aufgebaut ist. Im letzten Fall ist dafür zu sorgen, daß die Leiterbahnen elektrisch nicht kurzgeschlossen werden.

Das erfindungsgemäße Motorkonzept erfordert für die Ankerausführung eine Flachwicklung, in welcher der Wickelkopf innerhalb der Wicklungsebene liegt. Die Wicklungstechnologie sollte zusätzlich die Integration einer elektrischen Schaltung (SMD-Technik), von optoelektrischen Bauteilen für Encoderfunktion und eine Temperaturmeßsonde unterstützen. Diesbezüglich bietet sich eine Multilayer-Wicklungsausführung als gedruckte Schaltung an. Vorversuche zeigten, daß sich hinsichtlich des Leiterbahnquerschnittbildes gute Ergebnisse erzielen lassen.

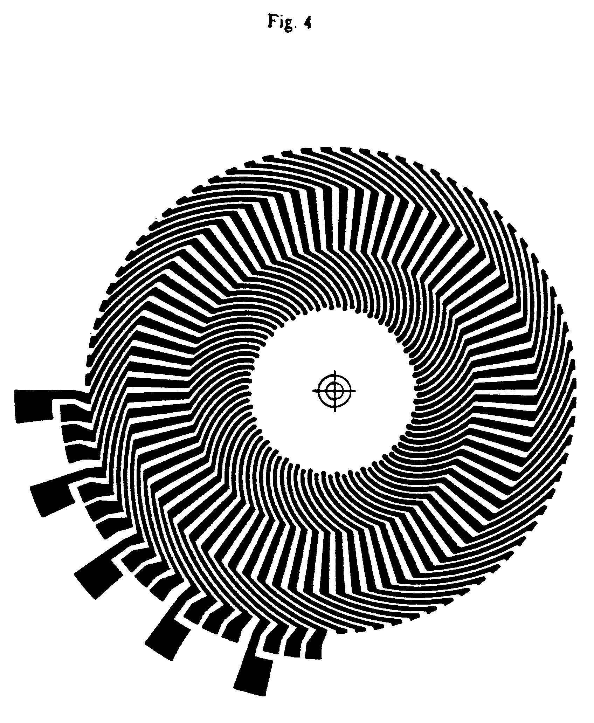

Für die Ausführung der Wicklungsstruktur stehen zwei Varianten zur Verfügung, nämlich die Wellenwicklung und die Schleifenwicklung. Beide Wicklungsarten sind in den Fig. 4 und 5 gezeigt. Bei der ersten Variante handelt es sich um eine Evolventenwicklung, die so nach der geometrischen Form der platzsparenden Rückführungsabschnitte der Leiterbahnen benannt ist. Die zweite Variante wird als Spiralwicklung ausgeführt. Die Vor- und Nachteile dieser Struktur sind in Tabelle 2 gegenübergestellt.

Tabelle 2

| Vergleich der Eigenschaften von Evolventen- und Spiralwicklung | | |
|---|---|---|
| Beurteilungskriterien | Evolventenwicklung | Spiralwicklung |
| Wicklungsart | Wellenwicklung | Schleifenwicklung |
| Phasenaufteilung | n Phasen pro Ebene | eine Phase pro Ebene |
| Flexibilität in der Wahl der Wicklungsebenen | beliebig | nur ganzzahlige Vielfache der Phasenzahl |
| Flexibilität in der Leiterbahngestaltung | klein | sehr groß |
| Wickelraumausnutzung bei konstanter Leiterbreite | mäßig | sehr gut |
| Begrenzung der minimalen Leiterbahnbreite | minimaler Bohrungsdurchmesser | Ätztechnologie |
| Anzahl benötigter Durchkontaktierungen | sehr groß | klein |
| Fertigungskosten | | wesentlich kleiner |

Eine große Bedeutung bei der Wicklungsauslegung kommt der Beachtung der Wirbelstromverluste zu. Im Gegensatz zu konventionellen Drahtwicklungen führt die Verwendung von Flachleitern (Breite/Höhe > 1) zu ungünstigen Verhältnissen. Wie Untersuchungen in der genannten Dissertation zeigen, ist besonders bei hochpoligen Magnetkreisen und hohen Rotordrehzahlen eine sorgfältige Auswahl der Leiterbahnbreite erforderlich. Im Gegensatz zur Spiralwicklung befinden sich bei der Evolventenwicklung die vermessungskritischen Durchkontaktierungen auf dem Innenradius der Wicklung und bestimmen somit die minimale Leiterbahnbreite.

Um die Wirbelstromverluste so klein wie möglich zu halten, sollten besonders bei hochpoligen oder Hochgeschwindigkeits-Antrieben die Leiterbahnen im Bereich des Luftspaltfeldes sich in Richtung größerer Radien nicht verbreitern. Während dies bei der Spiralwicklung keine Probleme bereitet, führt diese Maßnahme bei der Evolventenwicklung zu einem schlechten Kupferfüllfaktor, da hier die Leiteranzahl vom Radius unabhängig ist. Ein weiterer Vorteil der Spiralwicklung zeigt sich in dem zusätzlich verfügbaren Freiheitsgrad bezüglich der Leiterbahngeometrie. Diesem Punkt wird große Bedeutung beigemessen, was nachfolgend noch behandelt wird.

Die Fertigungskosten werden im wesentlichen durch die Art und Anzahl der Durchkontaktierungen beeinflußt. Während bei der Evolventenwicklung die Anzahl der nötigen Durchkontaktierungen der doppelten Leiterbahnzahl entspricht, wovon die Hälfte auf dem bemessungskritischen Innenradius der Wicklung liegt, befindet sich auf der Spiralwicklung nur eine der Polzahl entsprechende Anzahl von Durchkontaktierungen, deren Anordnung im Zentrum der Spirale hinsichtlich des Platzbedarfs völlig unkritisch ist.

Verschiedene Freiheitsgrade zur Gestaltung der Spiralwicklung werden im folgenden beschrieben.

Die Integration zum Beispiel eines hochauflösenden optischen Winkelencoders im Motorgehäuse führt zwangsläufig zu einem vergrößerten Motorgesamtdurchmesser. Der zusätzlich zur Verfügung stehende Bauraum wird durch eine angepaßte Wicklungsauslegung drehmomenterzeugend ausgenützt. Dies erfolgt durch eine Vergrößerung des Wicklungsdurchmessers sowie andererseits durch eine Variation der Leiterbahnbreite innerhalb der Wicklungsstruktur. Windungsrückschlüsse, die außerhalb des magnetischen Luftspaltfeldes liegen und somit keine Wirbelstrombremsmomente erzeugen, werden in verbreiterter Form ausgeführt. Diese Maßnahmen bewirken eine Erhöhung der Leiterbahndichte, eine Verlängerung der radialen (drehmomenterzeugenden) Leiterzüge, eine Verkleinerung des Wickelkopfwiderstandes, eine bessere Motorausnutzung und einen höheren Wirkungsgrad.

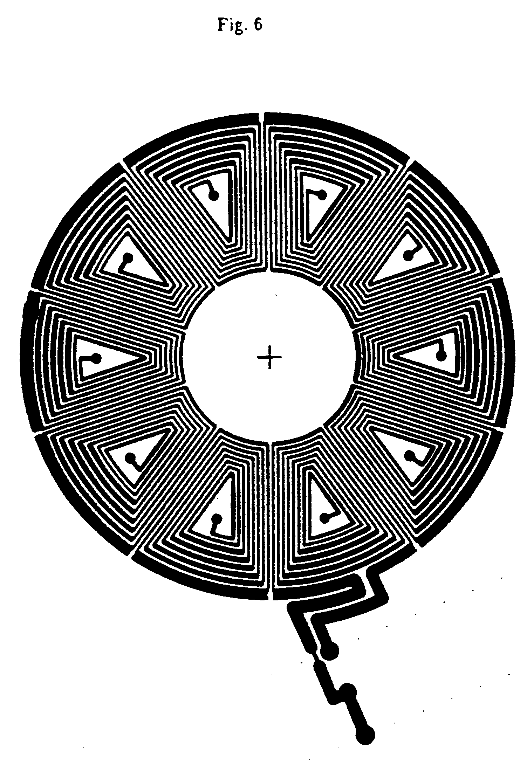

In Fig. 6 sind die erwähnten Maßnahmen zu erkennen. Eine Verstärkung der Leiterbahnen erfolgt zusätzlich an der innersten Spiralschleife, nämlich am Innendurchmesser, sowie am Außendurchmesser des Wicklungsprints. Diese Maßnahmen sind nötig, um das verstärkte Angreifen des Ätzmediums an einseitig freistehenden Bahnen zu kompensieren. Die Verbreiterung des äußersten Rückschlusses erfolgt besonders in Anbetracht einer günstigeren Einspannmöglichkeit des Multilayers.

Geht man von der Voraussetzung aus, daß die Leiterbahnbreite im magnetischen Luftspaltfeld konstant sein soll, dann erreicht man mit einer diametralen Leiterbahnverteilung, wie sie beispielsweise in den Fig. 5 oder 6 gezeigt ist, eine höhere Leiterbahndichte und einen höheren Füllfaktor als bei einer radialen Anordnung der Leiter. Die nicht drehmomentbildende Rückführung erfolgt zweckmäßig innen wie außen durch Kreisbögen.

Ein weiterer Freiheitsgrad zur Beeinflussung der Motorbetriebseigenschaften ist die Sehnung der Wicklung. Die Sehnung der Wicklung wird bei der in Fig. 5 und 6 gezeigten Anordnung bestimmt durch die Verteilung der Spiralwindungen innerhalb eines elektrischen Poles. Je weiter die Spiralwindungen nach innen zur Polmitte führen, umso stärker gesehnt ist die Wicklung. Begnügt man sich mit wenigen Spiralwindungen am Außenrand des Poles, dann ist die Wicklung schwach gesehnt und bei einer Windung um den Polrand sogar ungesehnt. Bei in Abhängigkeit von der Rotorposition vorgegebener Stromkurvenform und bei dem durch die permanentmagnetische Anordnung geprägten Magnetfeld läßt sich ein Optimum für den Sehnungsgrad der Wicklung und somit für die Anzahl der nach innen führenden Spiralwindungen berechnen, wo die winkelabhängigen Drehmomentschwankungen minimal werden.

Hierbei wird der Strombelag synchron mit der Drehung des Rotors mitgeführt. Die in Fig. 6 gezeigte Wicklung ist für sinusförmige stromkurvenform berechnet und ausgelegt. Die Sinuskurve kann analog erzeugt werden; sie kann aber auch digital mehrstufig angenähert werden. Je höher die Auflösung des Winkelgebers ist, umso besser kann die digitale Annäherung realisiert werden.

Es besteht selbstverständlich auch die Möglichkeit, die Wicklung und den Sehnungsgrad nach anderen Motorparametern zu optimieren. Nachträglich kann eine elektronische Drehmomentkorrektur vorgenommen werden, indem die Stromkurvenform in Abhängigkeit von der Rotorposition dem vorgegebenen Wicklungslayout und dem Rotorpermanentmagnetfeld angepaßt wird. In diesem Falle wird man die nötige Stromkurve rechnerisch oder meßtechnisch ermitteln, normieren, abspeichern und beim Motorbetrieb in Abhängigkeit von der aktuellen Rotorposition den normierten Stromwert auslesen und diesen mit dem durch die Regel- oder Steuergröße vorgegebenen Stromsollwert multiplizieren. Die erforderliche Stromkurve in Abhängigkeit vom Rotorwinkel kann unter der Nebenbedingung minimaler Verlustleistung aus folgender Gleichung berechnet werden:

$$IK\,(\varphi) = \frac{Iel \cdot \omega\, EK\,(\varphi)}{Rk \cdot \sum\limits_{i\,=\,1}^{n} \dfrac{Ei\,(\varphi)^2}{R_i}}$$

mit I = Stromamplitude, $\phi$ = Rotorwinkel, Iel = elektromagnetisches Drehmoment, E = induzierte Spannung bei Drehzahl, R = Phasenwiderstand, k = aktuelle Phasennummer (1 ... n), m = Anzahl Phasen, i = Laufparameter.

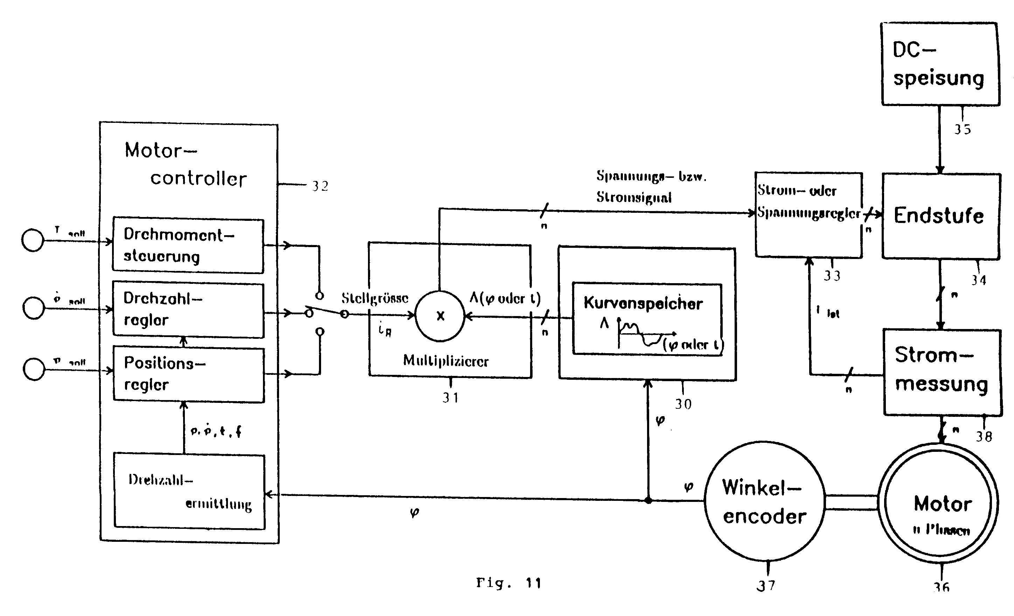

Das Produkt wird über den Leistungssteller den Motorphasen zugeführt. Eine nähere Beschreibung hierfür ist der genannten Dissertation entnehmbar, wobei ein entsprechendes Ausführungsbeispiel in Fig. 11 gezeigt ist. Gemäß Fig. 11 besteht eine elektronische Ansteuerschaltung aus einem Kurvenspeicher bzw. -generator 30 sowie aus einer arithmetischen Schalteinheit in Form eines Multiplizierers 31, der die Eingangssignale mit den Kurvenamplituden des Kurvenspeichers 30 nach vorgegebenen oder während des Motorbetriebs ermittelten Funktionen verknüpft.

Im Kurvenspeicher 30 sind Betriebskurven gespeichert, die eine Kompensation der Drehmomentschwankungen bewirken. Je nach Symmetrie des elektrischen oder magnetischen Kreises ist es nötig, die Kurven für alle Phasen getrennt oder nur für eine einzige Phase zu speichern. Im letzteren Fall werden mehrere, jeweils um den Phasenwinkel versetzte Kurven ausgelesen. Anstelle der Kurvenspeicher können auch Signalgeneratoren verwendet werden, die jeweils eine vordefinierte Signalkurve erzeugen.

Die Schalteinheit 31 verknüpft die rotorwinkelabhängig zur Verfügung gestellten bzw. erzeugten Kurvenamplituden-Werte mit den anliegenden Eingangssignalen bzw. Stellgrößen nach Maßgabe von vorgegebenen Funktionen.

In Abhängigkeit von dem jeweiligen Rotorwinkel wird die Stromkurve des Kurvenspeichers ausgelesen und mit einer Stromamplitude iA multipliziert, welche so gewählt ist, daß die Drehmomentschwankungen minimal werden.

Wenn der betreffende Motor ein nichtlineares Verhalten zeigt, ist es zweckmäßig, verschiedene Kurven für verschiedene Betriebsbereiche vorzusehen. Dies kann z. B. dadurch erfolgen, daß abhängig vom Betriebszustand des Motors ein Kurvenwahlschalter vorgesehen wird, oder dadurch, daß die Kurven derart verändert werden, daß diese besser an die jeweiligen Betriebszustände angepaßt sind. Eine Anpassung kann jedoch auch über eine Veränderung der Einstellgrößen erfolgen.

Die jeweiligen Werte der Stromkurve können entweder in Tabellen gespeichert oder jeweils in Abhängigkeit vom Betriebszustand errechnet werden.

Die Realisierung der Ansteuerschaltung kann auf verschiedene Art und Weise erfolgen; sie kann z. B. mittels Hardware durch analoge und/oder digitale Bauelemente realisiert sein oder mittels eines Software-Programms simuliert werden.

Ferner ist es möglich, der Ansteuerschaltung zusätzlich eine Momentensteuerung oder eine Positions-, Drehzahl- oder Beschleunigungsregelung zu überlagern. Im Ausführungsbeispiel hat die Schaltung die Struktur einer Kaskadenregelung. Dem Positionsregler ist im Motorcontroller 32 intern ein Drehzahlregler und diesem extern ein Stromregler 33 unterlagert.

Im Falle der Evolventenwicklung kann die Drehmomentschwankung minimiert werden durch eine der Stromkurvenform und dem Magnetfeld angepaßte Verteilung der Wicklung. Im Gegensatz zur Spiralwicklung weist die Evolventenwicklung gleichmäßig weite Einzelwindungen auf, die als Wellenwicklung ausgeführt sind; eine Sehnung ist hier schlecht möglich. Die Anpassung der Wicklung wird erreicht durch Verteilung, nämlich durch Überlappung der einzelnen Windungen um beispielsweise jeweils eine Leiterbahnteilung ( = Leiterbahnbreite + Leiterbahnabstand). Da die Windungen auf einem Layer liegen, sind im Gegensatz zur Spiralwicklung bei jeder Verteilung Durchkontaktierungen nötig.

Eine elektronische Drehmomentkorrektur analog zur Spiralwicklung ist auch bei der Evolventenwicklung möglich.

Ausführliche Informationen über die Optimierungsrechnungen und -betrachtungen sowie über die erzielten Ergebnisse finden sich in der genannten Dissertation. Ein konstantes Drehmoment wird bei Speisung mit Sinusströmen im Symmetrischen 2-, 3- oder Mehrphasensystem erreicht, wenn die induzierte Spannung des Motors ebenfalls Sinusform besitzt. Die optimale Annäherung an die Sinusform wird erreicht durch die erwähnte entsprechende Sehnung der Wicklung. Bei 3-Phasensystemen stört das Vorhandensein einer dritten oder davon vielfachen Harmonischen der induzierten Spannung nicht, wenn der Sternpunkt der 3-Phasenwicklung unbeschaltet ist.

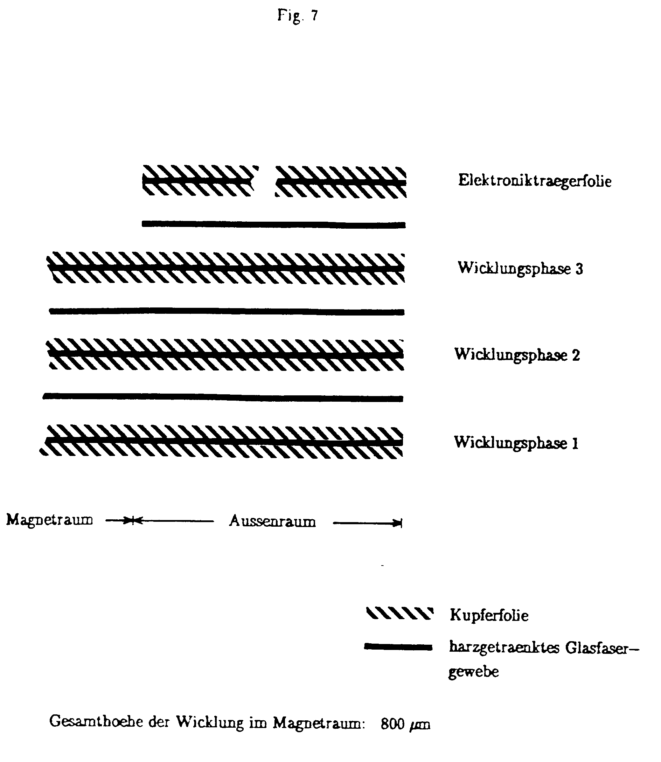

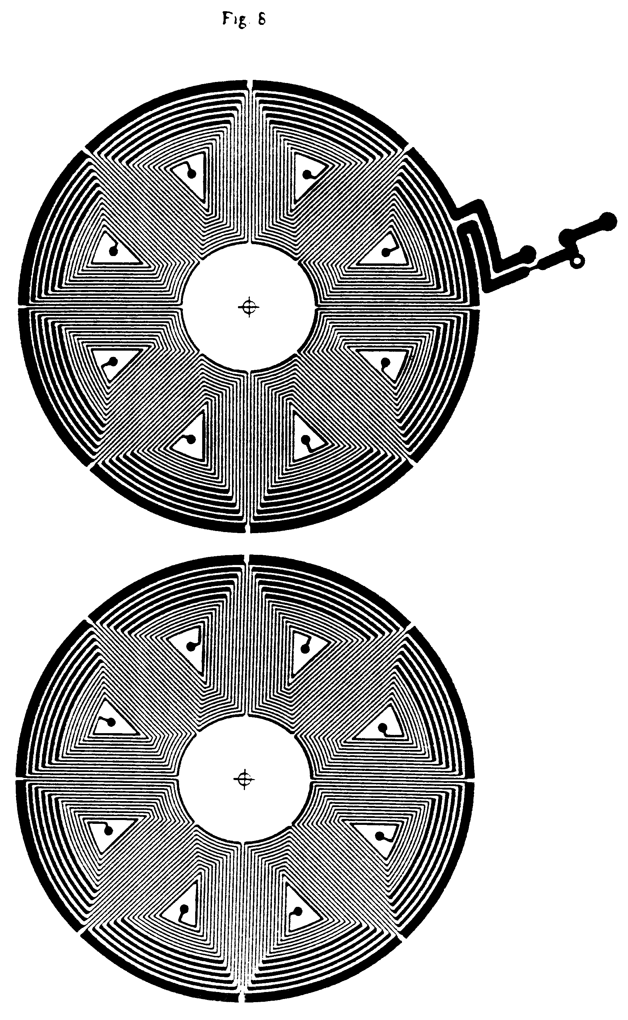

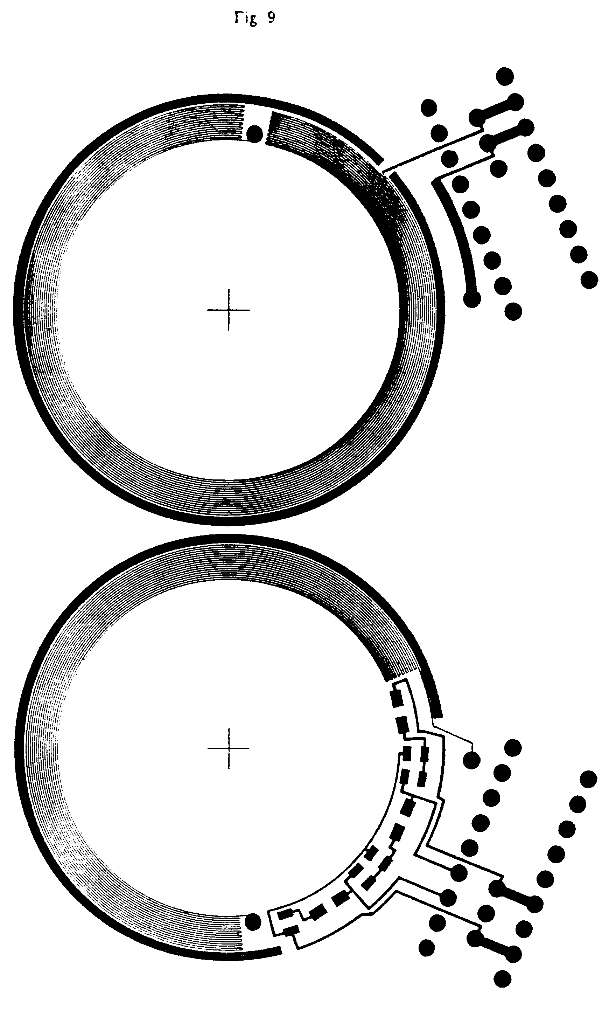

Fig. 7 zeigt den Querschnitt des Multilayers. Er besteht aus insgesamt vier doppelseitig kupferbeschichteten Isulationslagern, sowie aus drei beispielsweise harzgetränkten Glasfasergewebematten, kleberbehafteten Polyimidlagen oder anderen Isolationsschichten, die gleichzeitig als Isolationszwischenlagen und als Kleberschichten dienen. Der gesamte Verbund wird unter hoher Temperatur und großem Druck zusammengepreßt. Originalgetreue Muster der einzelnen Lagen sind in Fig. 8 und 9 zu sehen. Die Wicklungsphasen 1 (Fig. 8), 2 und 3 sind bis auf eine Winkelverschiebung von jeweils 30 Grad (geometrisch) und versetzte Wicklungszuführungen identisch. Die Elektronikträgerfolie (Fig. 9) enthält Pats für die Plazierung vom SMD-Bauteilen und trägt verteilt über die äußere Randzone eine mäanderförmig geschlungene Wicklung zur widerstandsabhängigen Temperaturmessung. Diese erfolgt zeitdiskret und pulsförmig in frei wählbaren Zeitintervallen.

Da das Verhältnis von Leiterbahnabstand zur Leiterbahnhöhe oder das Verhältnis von Leiterbahnbreite zur Leiterbahnhöhe für den ätztechnischen Prozeß sehr klein ist, machen sich Unterätzungen stark bemerkbar. Um diesen Faktor zu unterdrücken, ist es möglich, mit Hilfe von Photomasken (Negativstrukturen von Fig. 9) die Leiterbahnzwischenräume abzudecken und dünne Kupferschichten galvanisch auf den photomaskenfreien Flächen aufzutragen. Im nächsten Schritt kann eine weitere Photomaske aufgebracht werden, die sich mit der ersten flächenhaft deckt und nur zu einer Erhöhung der Maske führt. Danach wird galvanisch die erste Kupferschicht verstärkt. Die Photomasken bilden quasi das Stützkorsett für den Leiterbahnaufbau, der auf diese Weise mit steilen Wänden (Flanken) realisiert werden kann. Die beschriebenen Vorgänge kann man zyklisch wiederholen, bis die nötige Kupferhöhe erreicht ist. Im Gegensatz zum gewöhnlichen Ätzprozeß weisen die Leiterbahnen keine Unterätzung auf, und im Gegensatz zu gewöhnlichen galvanischen Auftragsprozessen zeigen die Leiterbahnen keine Pilzstruktur, die zum Kurzschluß benachbarter Leiterbahnen führen kann.

Die Rundlaufgüte des Motors wird wesentlich bestimmt durch die Sehnung der Wicklung. Diese wird beeinflußt durch das Auffüllen des Wicklungspoles mit Leiterbahnen zum Mittelpunkt, das heißt zur Durchkontaktierung hin. Für rechteckförmige Ankerströme werden im Zentrum sehr große Freiräume bleiben; für sinusförmige Ansteuerung wird die Spirale bis nahe ans Zentrum fortgesetzt. Entscheidend ist hier jeweils der Abstand zwischen der innersten radial oder diametral ausgerichteten Leiterbahn und der radialen Achse durch die Wicklungsmitte.

Die Speisung des Motors mit vordefinierten Strom- oder Spannungskurvenformen erfolgt in Abhängigkeit von der Rotorposition. Die Wicklungsanordnung im Falle der spiralfömigen oder auch der evolventenförmigen Ausführung wird zweckmäßig mit starker Sehnung bzw. mit starker Verteilung ausgelegt (Grund: hohe Motorausnutzung). Eine Speisung mit blockförmigen (rechteckförmigen) Strom- oder Spannungskurven würde deshalb bei kleiner Phasenzahl eine vergleichsweise hohe Drehmomentwelligkeit verursachen. Eine für rechteckförmigen Strombetrieb geeignete konzentrierte Wicklung würde mit den vorgeschlagenen Wicklungsprinzipien infolge der wenigen auf die Polränder konzentrierten Windungen eine schlechte Kupferausnützung des Luftspaltes bedeuten. Infolgedessen ist es empfehlenswert, für die Motorspeisung Stromkurven zu wählen, die über eine im positiven und im negativen Bereich einstufige Kurvenform hinausgehen. Es muß deshalb für die Kommutierung ein Positionssignal zur Verfügung stehen, das die Auslegung einer mehrstufigen oder sogar einer analogen Strom-oder Spannungskurve erlaubt. Hierfür wurde bereits oben eine Lösung mittels hochauflösender optischer Geber mit Incrementalcode zur möglichst guten Realisierung der idealen Strom- bzw. Spannungskurve vorgeschlagen. Je nach Anwendungsfall kann es aber auch zweckmäßig sein, optische Encoder oder auch Encoder nach anderen physikalischen Prinzipien (wie kapazitiv oder magnetisch) mit absoluter digitaler Winkelinformation (beispielsweise Grey-Code) oder analoger Information einzusetzen.

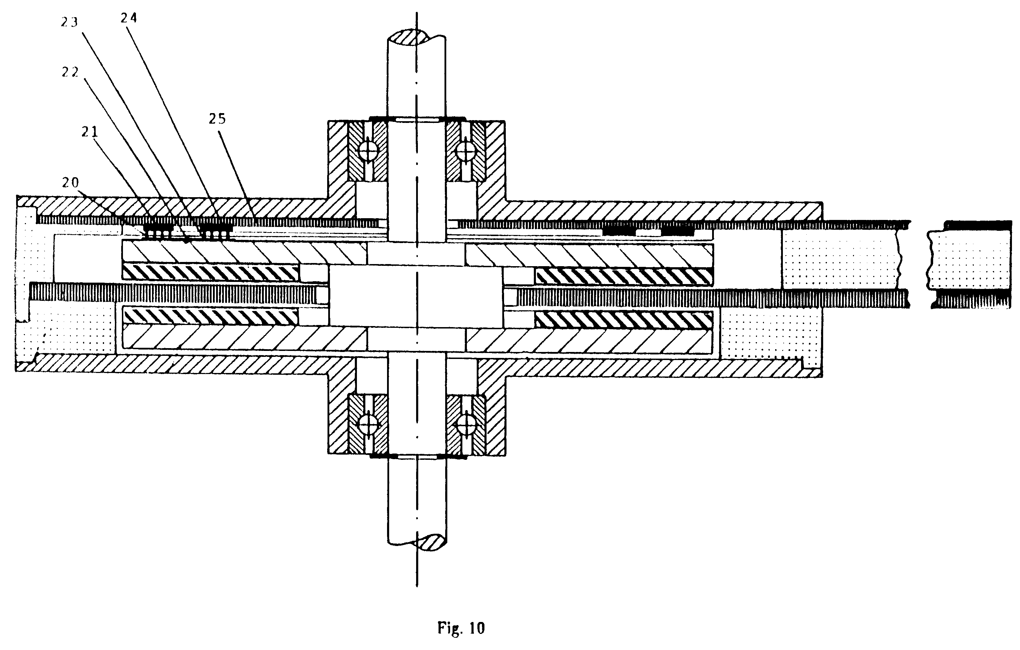

Eine Winkelerkennung mittels eines ohmschen Leitplastikpotentiometers wird in Fig. 10 dargestellt. Auf einem Träger 25, der mit dem Motorgehäuse fixiert ist, befinden sich eine Widerstandsbahn 21 sowie eine hochleitfähige Kontaktbahn 24. Die Widerstandsbahn 21 ist an zwei oder mehreren Stellen mit elektrischen Anschlüssen versehen, so daß längs dieser Bahn das elektrische Potential einer definierten Kurve folgt. Die winkelabhängige Potentialkurve kann durch mehrere Realisierungsmöglichkeiten beinflußt werden; durch den Einsatz verschiedener Widerstandsmaterialien, durch winkelabhängige Veränderung des Bahnquerschnittes, durch eine gezielte Auswahl der elektrischen Anschlußpunkte am Widerstandsbelag oder durch eine äußere und an den Anschlußpunkten vorgenommene elektrische Beschaltung mit aktiven oder passiven Bauelementen. Das elektrische Potential der Widerstandsbahn wird mit einem Schleiferabgriff 20 abgenommen. Bei einem Motorbetrieb mit unbegrenztem Winkelbereich ist es nötig, das Schleifersignal mit einem zweiten Schleifer 23 über eine hochleitfähige Kontaktbahn wieder auf ein stehendes System rückzuübertragen. Beide Schleiferabgriffe sind mechanisch mit dem drehenden Rotor verbunden.

Um einen möglichst verschleißfreien Betrieb zu gewährleisten, ist es sinnvoll, praktisch stromlos das Potential auf der Widerstandsbahn abzugreifen. Dies kann beispielsweise über als Spannungsfolger geschaltete Operationsverstärker erfolgen.

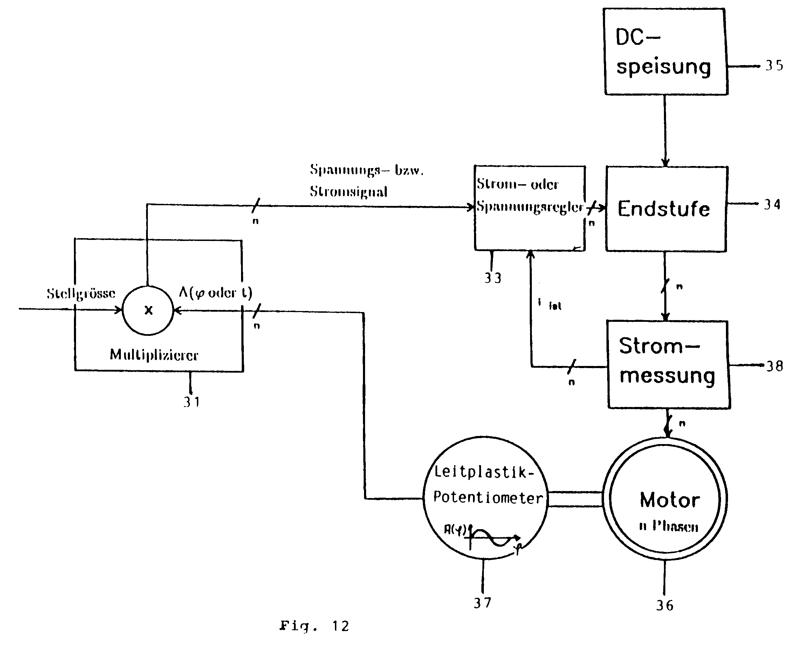

Eine Vereinfachung der in Fig. 11 gezeigten Schaltung kann gemäß Fig. 12 erfolgen, wenn das Potentiometer nicht ein Winkelsignal zum Auslesen der gespeicherten Strom- oder Spannungskurven liefert, sondern direkt ein Signal, das den gewünschten Strom- bzw. Spannungskurven entspricht. In diesem Fall muß die Widerstandsbahn dementsprechend derart abgeglichen werden, daß an den Schleifabgriffen ein den erforderlichen Strom- bzw. Spannungskurven entsprechendes Potential ansteht. Bei einem 3-Phasenmotor können mit Hilfe von drei, eine Phasenverschiebung von 120 Grad aufweisenden Schleifern direkt die drei erforderlichen Strombzw. Spannungskurven abgeglichen werden. Eine Anordnung mit zwei, z. B. um 90 Grad versetzte Schleiferabgriffe ist jedoch auch ausreichend, da aus diesen beiden Signalen die drei benötigten Phasenströme- bzw. -spannungen berechnet werden können.

Die sensorlose Winkelinformation läßt sich auch unter Ausnutzung der durch die Rotordrehung in Hilfsspulen oder der direkt in der Motorwicklung induzierten Spannung oder mittels bestimmter Harmonischer der induzierten Spannung ableiten. Diese kann über eine elektrische Auswerteschaltung Informationen über Winkelposition, Drehrichtung oder Drehzahl vermitteln.

Der Synchronmotor ist infolge seiner Konstruktions- und Funktionsweise sehr gut geeignet als Servobzw. stellantrieb, insbesondere für einen flachen Einbauraum. Ebenso bietet es sich geradezu an, bei nötigen Getriebeübersetzungen Getriebe mit flacher Bauform auszuwählen und an den Motor anzuflanschen oder in den Motor zu integrieren. Solche Getriebe sind beispielsweise Harmonic-Drive-Getriebe oder Planetenradgetriebe.

**Patentansprüche**

1. Elektronisch kommutierter Synchronmotorantrieb in Form eines Linear- oder Rotationsaktuators, dessen Aktuatorelement aus einem verschiebbar bzw. drehbar gelagerten Permanentmagneten und dessen Stator aus einer Wicklung gebildet ist,
gekennzeichnet durch eine Detektoreinrichtung (11 bis 14; 20 bis 24), welche ein die jeweilige Relativ- bzw. Winkellage des Linear- bzw. Rotationsaktuators (1, 2) anzeigendes Positionssignal erzeugt, sowie durch eine Ansteuereinrichtung, die nach Maßgabe des Positionssignals der Wicklung (3; 3a, 3b) einen der erfaßten Position zugeordneten Strom bzw. eine der erfaßten Position zugeordnete Spannung erzeugt, dessen bzw. deren Kurvenform sich aus einzelnen im voraus definierten Harmonischen zusammensetzt und die insbesondere einer sinusförmigen Kurvenform entspricht.

2. Synchronmotorantrieb nach Anspruch 1,
**dadurch gekennzeichnet,** daß das von der Detektoreinrichtung (11 bis 14; 20 bis 24) erzeugte Positionssignal incremental, digital oder analog ist.

3. Synchronmotorantrieb nach Anspruch 2,
**dadurch gekennzeichnet,** daß die Detektoreinrichtung (11 bis 14; 20 bis 24) das Positionssignal sensorlos aus mindestens einer der in der Wicklung induzierten, lage- und drehzahlabhängigen Spannungen ableitet.

4. Synchronmotorantrieb nach Anspruch 2,
**dadurch gekennzeichnet,** daß die Detektoreinrichtung (11 bis 14) das Positionssignal mittels eines die Lage des Aktuators (1, 2) erfassenden Sensors (14) erzeugt.

5. Synchronmotorantrieb nach Anspruch 3 oder 4,
**dadurch gekennzeichnet,** daß die Detektoreinrichtung (11 bis 14; 20 bis 24) extern direkt oder indirekt an den Antrieb angekuppelt ist.

6. Synchronmotorantrieb nach Anspruch 3 oder 4,
**dadurch gekennzeichnet,** daß die Detektoreinrichtung (11 bis 14; 20 bis 24) im Motorgehäuse integriert ist.

7. Synchronmotorantrieb nach Anspruch 5 oder 6,
**dadurch gekennzeichnet,** daß der Sensor (14) einen optischen Geber (12) aufweist, dessen Encoder (11) an dem Aktuator (1, 2) befestigt ist.

8. Synchronmotorantrieb nach Anspruch 5 oder 6,
**dadurch gekennzeichnet,** daß der Sensor ein ohmscher Lageaufnehmer (20 bis 24) ist.

9. Synchronmotorantrieb nach Anspruch 8,
**dadurch gekennzeichnet,** daß der ohmsche Lageaufnehmer elektrisch und mechanisch als Linear- bzw. Drehpotentiometer (20 bis 24) mit oder ohne Weg- bzw. Winkelbegrenzung ausgebildet ist, dessen Abgriff (20, 23) und/oder Widerstandsbelag (21) mit dem Aktuator (1, 2) gekuppelt ist, wobei das Positionssignal ein absolutes Weg- bzw. Winkelsignal darstellt.

10. Synchronmotorantrieb nach Anspruch 9,
**dadurch gekennzeichnet,** daß das Potentiometer (20 bis 24) eine Kennlinie mit weg- bzw. winkelabhängiger Funktion aufweist, welche entweder durch entsprechende geometrische Ausbildung oder Werkstoffzusammensetzung des Widerstandsbelags (21) oder durch geeignete äußere oder innere elektrische Beschaltung eingestellt ist.

11. Synchronmotorantrieb nach Anspruch 9 oder 10,
**dadurch gekennzeichnet,** daß der Widerstandsbelag (21) aus Leitplastik besteht.

12. Synchronmotorantrieb nach einem der Ansprüche 9 bis 11,
**dadurch gekennzeichnet,** daß die Signalabnahme vom Potentiometer (20 bis 24) stromlos oder mit eingeprägtem Strom erfolgt.

**13.** Synchronmotorantrieb nach einem der Ansprüche 9 bis 12,
**dadurch gekennzeichnet,** daß der Widerstandsbelag (21) aus mehreren Widerstandsbahnen gebildet ist und/oder daß der Abgriff mehrere Abgriffelemente (20, 23) aufweist.

**14.** Synchronmotorantrieb nach einem der Ansprüche 1 bis 13,
**dadurch gekennzeichnet,** daß die Ansteuereinrichtung einen Signalgenerator aufweist, der zur Erzeugung des eingeprägten Stroms das Positionssignal mit mindestens einer Steuer- oder Regelgröße arithmetisch verknüpft.

**15.** Synchronmotorantrieb nach Anspruch 14,
**dadurch gekennzeichnet,** daß der Signalgenerator den einer bestimmten Weg- bzw. Winkellage zugeordneten Wert des einzuprägenden Stroms entweder einem Speicher entnimmt, dessen Adressen jeweils einem Wert des Positionssignals zugeordnet sind, oder diesen Wert nach Maßgabe einer vorgegebenen Funktion hard- oder softwaremäßig errechnet.

**16.** Synchronmotorantrieb nach einem der Ansprüche 9 bis 15,
**dadurch gekennzeichnet,** daß das Positionssignal des Linear- bzw. Drehpotentiometers (20 bis 24) nicht unmittelbar einer Winkelinformation entspricht, sondern ein Maß für winkelabhängige Ansteuerungssignale für den Motor oder zumindest für solche Signale ist, aus denen mittels funktioneller oder arithmetischer Operationen die Ansteuerungssignale ableitbar sind.

**17.** Synchronmotorantrieb nach Anspruch 16,
**dadurch gekennzeichnet,** daß die Ansteuereinrichtung die Ansteuerungssignale mit einer Steuer- und Führungsgröße, insbesondere Regelgröße multipliziert und einen dementsprechend verstärkten Strom den Motorphasen einprägt.

**18.** Synchronmotorantrieb nach einem der vorhergehenden Ansprüche,
**dadurch gekennzeichnet,** daß die Wicklung durch mindestens eine Multilayervicklung gebildet ist.

**19.** Synchronmotorantrieb in Form eines Scheibenläufermotors nach einem der vorangehenden Ansprüche,
**dadurch gekennzeichnet,** daß mehrere oder alle Magnetpole auf einer Magnetscheibe (1a; 1a, 1b) aufmagnetisiert oder jeweils aus Einzelmagneten gebildet sind.

**20.** Synchronmotorantrieb nach Anspruch 19,
**dadurch gekennzeichnet,** daß als magnetischer Rückschluß für die Magnetpole ein diesen gleichzeitig als Träger dienendes, rotierendes Eisenjoch (1c) oder ein Stator vorgesehen ist, der geblecht ist oder aus massivem Ferrit-, Kunststoff-Eisen-Verbund oder anderem Material mit geringen Wirbelstrom- und Ummagnetisierungsverlusten besteht.

**21.** Synchronmotorantrieb in Form eines Scheibenläufermotors nach einem der vorangehenden Ansprüche,
**dadurch gekennzeichnet,** daß der Permanentmagnetrotor (1, 2) aus mehreren längs der Rotationsachse hintereinander angeordneten und miteinander verbundenen Einzelrotoren besteht, wobei jedem Einzelrotor mindestens eine dem Luftspaltfeld desselben ausgesetzte Wicklung (3; 3a, 3b) zugeordnet ist.

**22.** Synchronmotorantrieb mit einer aus einer gedruckten oder gestanzten Schaltung bestehenden Wicklung nach einem der vorangehenden Ansprüche,
**dadurch gekennzeichnet,** daß auf der gedruckten oder gestanzten Schaltung (3) mindestens eine elektrische Schaltung zur Ansteuerung des Motors, zur Signalverarbeitung oder zur Ansteuerung des Lagesensors (11 bis 14; 20 bis 24), eines Drehzahlsensors, Temperatursensors oder anderer Sensoren, wie insbesondere Sensoren zur Erfassung optischer, mechanischer, thermischer, elektrischer oder magnetischer Größen, und/oder mindestens einer dieser Sensoren integriert sind.

**23.** Synchronmotorantrieb nach Anspruch 22,
**dadurch gekennzeichnet,** daß die in Anspruch 22 genannten Einrichtungen im Motorgehäuse integriert sind.

Fig. 1

a

2

1

1a

3

1b

1c

Rotor

b

2

1c

3a

1a

3b

Rotor

14

Fig. 2

**Fig. 3**

TEILUNG      :      500
STRICH/STEG  :      3:7
REFERENZ     :  .065  mm

11

Fig. 4

Fig. 5

Fig. 6

Fig. 7

Elektroniktraegerfolie

Wicklungsphase 3

Wicklungsphase 2

Wicklungsphase 1

Magnetraum ⟶⇥⇤⟶ Aussenraum ⟶⟶

NNNNN  Kupferfolie

━━━━━  harzgetraenktes Glasfasergewebe

Gesamthoehe der Wicklung im Magnetraum:  800 μm

Fig. 8

Fig. 9

Fig. 10

Fig. 11

EP 0 619 639 A1

Fig. 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | GB-A-2 193 055 (MATSUSHITA ELECTRIC IND. CO. LTD)<br>* Seite 8, Zeile 54 - Zeile 60; Abbildung 14 *<br>* Seite 3, Zeile 34 - Zeile 49 * | 1,2,4,6 | H02K29/00<br>G05D3/14 |
| Y |  | 3,5,8,9,<br>14,15,<br>18-20,<br>22,23 |  |
|  | --- |  |  |
| Y | EP-A-0 152 508 (KANGYO DENKIKIKI KABUSHIKI KAISHA)<br>* Seite 12, Zeile 11 - Zeile 15 *<br>* Seite 17, Zeile 23 - Zeile 28; Abbildungen 8A,15 * | 18-20,<br>22,23 |  |
|  | --- |  |  |
| Y | EP-A-0 180 083 (KOLLMORGEN TECHNOLOGIES CORP.)<br>* Seite 12, Zeile 3 - Zeile 20; Abbildung 2 * | 14,15 |  |
|  | --- |  | RECHERCHIERTE SACHGEBIETE (Int.Cl.5) |
| Y | PATENT ABSTRACTS OF JAPAN<br>vol. 11, no. 374 (E-562) (2821) 5. Dezember 1987<br>& JP-A-62 141 992 (TOSHIBA CORP.) 25. Juni 1987<br>* Zusammenfassung * | 3,14 | H02K<br>G05D<br>H02P |
|  | --- |  |  |
| Y | EDN-ELECTRICAL DESIGN NEWS,<br>Bd.32, Nr.25, 10. Dezember 1987,<br>NEWTON,MA,USA<br>Seite 332<br>D:EICHENBERG 'Power op amp forms position controller' | 5,8,9 |  |
|  | ---<br>-/-- |  |  |

Der vorliegende Recherchenbericht wurde für alle Patentansprüche erstellt

| Recherchenort | Abschlußdatum der Recherche | Prüfer |
|---|---|---|
| BERLIN | 24. Juni 1994 | Leouffre, M |

EPO FORM 1503 03.82 (P04C03)

Europäisches Patentamt

**EUROPÄISCHER RECHERCHENBERICHT**

Nummer der Anmeldung

EP 94 10 6155

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | IEEE POWER ELECTRONICS SPECIALISTS CONFERENCE, Bd.1, 11. April 1988, KYOTO JAPAN Seiten 214 - 221 D.NAUNIN & AL. 'P.M.Brushless servodrive controlled by 16 Bit Microcomputer' * Abbildung 16 * --- | 2 | |
| A | US-A-4 670 679 (H.M.I.KOOT & AL.) * Spalte 3, Zeile 62 - Spalte 4, Zeile 13; Abbildungen 1-3C * --- | 5,8,9 | |
| A | FR-A-2 570 177 (R.BOSCH GMBH) * Abbildungen 3,4 * ----- | 13 | |
| | | | **RECHERCHIERTE SACHGEBIETE (Int.Cl.5)** |

Der vorliegende Recherchenbericht wurde für alle Patentansprüche erstellt

| Recherchenort | Abschlußdatum der Recherche | Prüfer |
|---|---|---|
| BERLIN | 24. Juni 1994 | Leouffre, M |